# EUROPEAN PATENT APPLICATION

(11) **EP 4 807 327 A1**
(43) Date of publication of application: **16.09.2026**
(21) Application number: 26160646.1
(22) Date of filing: 25.02.2026
(51) Int. Cl.: G01C 21/34, G01C 21/36, G08G 1/14, H04W 12/02

(54) **METHOD, APPARATUS AND COMPUTER PROGRAM PRODUCT FOR ANONYMIZING DESTINATIONS**

(30) Priority: 14.03.2025 US 202519080147
(71) Applicant: HERE Global B.V., 5611 ZT Eindhoven (NL)
(72) Inventor: Beaurepaire, Jérôme, 92400 Courbevoie (FR); Bennati, Stefano, 8050 Zürich (CH)
(74) Representative: Sariot, Eray

(57) **Abstract**

Embodiments described herein relate to contextually recommend parking locations to improve the privacy of visited destinations. Methods may include: receiving a routing request from a user for a route to a destination Point-of-Interest, POI; determining a sensitivity of the destination POI; analyzing parking locations proximate the destination POI to determine a level of privacy associated with the parking locations POI; selecting at least one parking location based on the level of privacy associated with the at least one parking location; generating at least one candidate route to the at least one parking location; and calculating a privacy rating associated with the at least one candidate route and the at least one parking location based on a likelihood of associating the at least one candidate route and the at least one parking location with the destination POI.

## Description

### TECHNOLOGICAL FIELD

An example embodiment of the present disclosure relates to anonymizing destination points-of-interest, and more particularly, to contextually recommend parking locations to improve the privacy of visited points-of-interest.

### BACKGROUND

Service providers and device manufacturers (e.g., wireless, cellular, navigation, etc.) are continually challenged to deliver value and convenience to consumers by providing compelling and useful services. Location-based services have been developed to provide users with useful and relevant information regarding route planning and to facilitate route guidance along the way. Substantially static data regarding roadways is used in conjunction with dynamic data, such as traffic, construction, and incident information to provide accurate and timely information to a driver to help route planning and decision making.

Data received from infrastructure monitoring systems and crowd-sourced data has become ubiquitous and may be available for facilitating route guidance and navigation system information. However, this data can be mined to provide various other services to users and to grow the availability of location-based services. The provision of location-based services is dependent upon understanding the location of a user requesting the services. Maintaining anonymity while also being able to access location-based services is a challenge.

### BRIEF SUMMARY

A method, apparatus, and computer program product are provided in accordance with an example embodiment described herein for anonymizing points-of-interest, and more particularly, to contextually recommend parking locations to improve the privacy of visited points-of-interest. According to an example embodiment, an apparatus is provided including at least one processor and at least one memory including computer program code, the at least one memory and computer program code configured to, with the processor, cause the apparatus to at least: receive a routing request from a user for a route to a destination POI (point-of-interest); determine a sensitivity of the destination POI; analyze parking locations proximate the destination POI based on the sensitivity of the destination POI to determine a level of privacy associated with the parking locations, wherein the level of privacy is based on a likelihood of associating parking in a respective parking location with the destination POI; select at least one parking location based on the level of privacy associated with the at least one parking location; generate at least one candidate route to the at least one parking location; and provide for presentation of the at least one candidate route and a privacy rating associated with the at least one candidate route and the at least one parking location based at least in part on the level of privacy of the at least one parking location.

Causing the apparatus of certain embodiments to analyze the parking locations proximate the destination POI based on the sensitivity of the destination POI further includes causing the apparatus to: analyze the parking locations and POIs (points-of-interest) proximate the destination POI to determine the level of privacy associated with the parking locations. According to some embodiments a number of POIs proximate the parking locations is proportional to the level of privacy associated with the parking locations.

Causing the apparatus of certain embodiments to analyze the parking locations and the POIs proximate the destination POI to determine the level of privacy associated with the parking locations includes causing the apparatus to: analyze the parking locations and the POIs proximate the destination POI; determine the POIs proximate the destination POI that are available at a time the at least one candidate route is estimated to arrive at the parking locations; and determine the level of privacy associated with the parking locations based at least in part on availability of the POIs proximate the destination POI. According to some embodiments the availability of the POIs proximate the destination POI corresponds to whether the POIs proximate the destination POI are open for business or closed.

Causing the apparatus of certain embodiments to receive the routing request from the user for a route to the destination POI further includes causing the apparatus to receive an indication that the routing request requires privacy. Causing the apparatus of some embodiments to provide for presentation of the at least one candidate route and the privacy rating associated with the at least one candidate route and the at least one parking location based at least in part on the at least one parking location includes causing the apparatus to: provide for presentation of at least two candidate routes, at least two parking locations, and privacy ratings associated with the at least two candidate routes and the at least two parking locations; and provide for a user input element to select a preferred one of the at least two candidate routes and the at least two parking locations.

According to certain embodiments causing the apparatus to provide for presentation of at least two candidate routes and the at least two parking locations and privacy ratings associated with the at least two candidate routes and the at least two parking locations includes causing the apparatus to: provide for presentation of at least one trade-off for each of the at least two candidate routes and the at least two parking locations, wherein the at least one trade-off comprises one or more of added time relative to a candidate route having a lower privacy rating or a parking recommendation a greater distance away relative to a candidate route having a lower privacy rating. According to some embodiments the sensitivity of the destination POI is determined by at least one of a user-entered sensitivity rating, a crowdsourced sensitivity rating, or a database of point-of-interest category sensitivity ratings.

Causing the apparatus of certain embodiments to receive the routing request from the user for the route to the destination POI includes causing the apparatus to: receive the routing request from the user for the route to the destination POI and at least one other waypoint POI. According to some embodiments causing the apparatus to provide for presentation of the at least one candidate route and the privacy rating associated with the at least one candidate route at the at least one parking location includes causing the apparatus to: provide for presentation of a first candidate route with a first order of the at least one other waypoint POI and the destination POI and a first privacy rating associated with the first candidate route; and provide for presentation of a second candidate route with a second order of the at least one other waypoint POI and the destination POI and a second privacy rating associated with the second candidate route, wherein the first order is different from the second order, and the first privacy rating is different from the second privacy rating.

According to some embodiments the at least one parking location is associated with at least one POI other than the destination POI. The at least one parking location of an example embodiment is greater than a predefined distance from the destination POI, and wherein the at least one candidate route comprises an indication for the user to take at least one of public transit or shared mobility from the at least one parking location to the destination POI.

Embodiments provided herein include a computer program product including at least one non-transitory computer-readable storage medium having computer-executable program code portions stored therein, the computer-executable program code portions comprising program code instructions configured to: receive a routing request from a user for a route to a destination POI (point-of-interest); determine a sensitivity of the destination POI; analyze parking locations proximate the destination POI based on the sensitivity of the destination POI to determine a level of privacy associated with the parking locations, wherein the level of privacy is based on a likelihood of associating parking in a respective parking location with the destination POI; select at least one parking location based on the level of privacy associated with the at least one parking location; generate at least one candidate route to the at least one parking location; and provide for presentation of the at least one candidate route and a privacy rating associated with the at least one candidate route and the at least one parking location based at least in part on the level of privacy of the at least one parking location.

According to certain embodiments the program code instructions to analyze the parking locations proximate the destination POI based on the sensitivity of the destination POI further include program code instructions to: analyze the parking locations and POIs (points-of-interest) proximate the destination POI to determine the level of privacy associated with the parking locations. According to some embodiments a number of POIs proximate the parking locations is proportional to the level of privacy associated with the parking locations.

The program code instructions of certain embodiments to analyze the parking locations and the POIs proximate the destination POI to determine the level of privacy associated with the parking locations include program code instructions to: analyze the parking locations and the POIs proximate the destination POI; determine the POIs proximate the destination POI that are available at a time the at least one candidate route is estimated to arrive at the parking locations; and determine the level of privacy associated with the parking locations based at least in part on availability of the POIs proximate the destination POI. According to some embodiments the availability of the POIs proximate the destination POI corresponds to whether the POIs proximate the destination POI are open for business or closed.

According to certain embodiments the program code instructions to receive the routing request from the user for a route to the destination POI further include program code instructions to receive an indication that the routing request requires privacy. According to some embodiments the program code instructions to provide for presentation of the at least one candidate route and the privacy rating associated with the at least one candidate route and the at least one parking location include program code instructions to: provide for presentation of at least two candidate routes, at least two parking locations and privacy ratings associated with the at least two candidate routes, and the at least two parking locations; and provide for a user input element to select a preferred one of the at least two candidate routes and the at least two parking locations.

The program code instructions to provide for presentation of at least two candidate routes and the at least two parking locations and privacy ratings associated with the at least two candidate routes and the at least two parking locations include, in some embodiments, program code instructions to: provide for presentation of at least one trade-off for each of the at least two candidate routes and the at least two parking locations, wherein the at least one trade-off comprises one or more of added time relative to a candidate route having a lower privacy rating or a parking recommendation a greater distance away relative to a candidate route having a lower privacy rating.

According to certain embodiments the sensitivity of the destination POI is determined by at least one of a user-entered sensitivity rating, a crowdsourced sensitivity rating, or a database of point-of- interest category sensitivity ratings. According to some embodiments the program code instructions to receive the routing request from the user for the route to the destination POI include program code instructions to: receive the routing request from the user for the route to the destination POI and at least one other waypoint POI.

The program code instructions to provide for presentation of the at least one candidate route and the privacy rating associated with the at least one candidate route and the at least one parking location include in some embodiments program code instructions to: provide for presentation of a first candidate route with a first order of the at least one other waypoint POI and the destination POI and a first privacy rating associated with the first candidate route; and provide for presentation of a second candidate route with a second order of the at least one other waypoint POI and the destination POI and a second privacy rating associated with the second candidate route, wherein the first order is different from the second order, and the first privacy rating is different from the second privacy rating.

According to some embodiments the at least one parking location is associated with at least one POI other than the destination POI. According to certain embodiments the at least one parking location is greater than a predefined distance from the destination POI, and wherein the at least one candidate route comprises an indication for the user to take at least one of public transit or shared mobility from the at least one parking location to the destination POI.

Embodiments described herein further include a computer program product having computer-executable program code portions stored therein, the computer executable program code portions including program code instructions configured to perform any method described herein.

Embodiments provided herein include a method including: receiving a routing request from a user for a route to a destination POI (point-of-interest); determining a sensitivity of the destination POI; analyzing parking locations proximate the destination POI based on the sensitivity of the destination POI to determine a level of privacy associated with the parking locations, wherein the level of privacy is based on a likelihood of associating parking in a respective parking location with the destination POI; selecting at least one parking location based on the level of privacy associated with the at least one parking location; generating at least one candidate route to the at least one parking location; calculating a privacy rating associated with the at least one candidate route and the at least one parking location based on a likelihood of associating the at least one candidate route and the at least one parking location with the destination POI; and providing for presentation of the at least one candidate route and the privacy rating associated with the at least one candidate route and the level of privacy of the at least one parking location. In addition, any method described herein may be a computer-implemented method.

According to some embodiments analyzing the parking locations proximate the destination POI based on the sensitivity of the destination POI further includes analyzing the parking locations and POIs (points-of-interest) proximate the destination POI to determine the level of privacy associated with the parking locations. According to some embodiments a number of POIs proximate the parking locations is proportional to the level of privacy associated with the parking locations.

According to certain embodiments analyzing the parking locations and the POIs proximate the destination POI to determine the level of privacy associated with the parking locations includes: analyzing the parking locations and the POIs proximate the destination POI; determining the POIs proximate the destination POI that are available at a time the at least one candidate route is estimated to arrive at the parking locations; and determining the level of privacy associated with the parking locations based at least in part on availability of the POIs proximate the destination POI. According to some embodiments the availability of the POIs proximate the destination POI corresponds to whether the POIs proximate the destination POI are open for business or closed.

According to some embodiments providing for presentation of the at least one candidate route and the privacy rating associated with the at least one candidate route and the at least one parking location includes: providing for presentation of at least two candidate routes, at least two parking locations, and privacy ratings associated with the at least two candidate routes and at least two parking locations; and providing for a user input element to select a preferred one of the at least two candidate routes and the at least two parking locations.

Embodiments provided herein include an apparatus including: means for receiving a routing request from a user for a route to a destination POI (point-of-interest); means for determining a sensitivity of the destination POI; means for analyzing parking locations proximate the destination POI based on the sensitivity of the destination POI to determine a level of privacy associated with the parking locations, wherein the level of privacy is based on a likelihood of associating parking in a respective parking location with the destination PO; means for selecting at least one parking location based on the level of privacy associated with the at least one parking location; means for generating at least one candidate route to the at least one parking location; means for calculating a privacy rating associated with the at least one candidate route and the at least one parking location based on a likelihood of associating the at least one candidate route and the at least one parking location with the destination POI; and means for providing for presentation of the at least one candidate route and the privacy rating associated with the at least one candidate route and the level of privacy of the at least one parking location.

According to some embodiments the means for analyzing the parking locations proximate the destination POI based on the sensitivity of the destination POI further includes means for analyzing the parking locations and POIs (points-of-interest) proximate the destination POI to determine the level of privacy associated with the parking locations. According to some embodiments a number of POIs proximate the parking locations is proportional to the level of privacy associated with the parking locations.

According to certain embodiments the means for analyzing the parking locations and the POIs proximate the destination POI to determine the level of privacy associated with the parking locations includes: means for analyzing the parking locations and the POIs proximate the destination POI; means for determining the POIs proximate the destination POI that are available at a time the at least one candidate route is estimated to arrive at the parking locations; and means for determining the level of privacy associated with the parking locations based at least in part on availability of the POIs proximate the destination POI. According to some embodiments the availability of the POIs proximate the destination POI corresponds to whether the POIs proximate the destination POI are open for business or closed.

According to some embodiments the means for providing for presentation of the at least one candidate route and the privacy rating associated with the at least one candidate route and the at least one parking location includes: means for providing for presentation of at least two candidate routes, at least two parking locations, and privacy ratings associated with the at least two candidate routes and at least two parking locations; and means for providing for a user input element to select a preferred one of the at least two candidate routes and the at least two parking locations.

### BRIEF DESCRIPTION OF THE DRAWINGS

Having thus described example embodiments of the disclosure in general terms, reference will now be made to the accompanying drawings, which are not necessarily drawn to scale, and wherein:
Figure 1 illustrates a communications diagram in accordance with an example embodiment of the present disclosure;
Figure 2 is a block diagram of an apparatus that may be specifically configured for contextually recommending parking locations to improve the privacy of visited points-of-interest in accordance with an example embodiment of the present invention;
Figure 3 illustrates a flow diagram of a process for improving the privacy of sensitive points-of-interested visited according to an example embodiment of the present disclosure; and
Figure 4 is a flowchart of a method for anonymizing a destination point-of-interest of a trajectory according to an example embodiment of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present disclosure.

Mobility data may be defined as a set of points or probe data points, each of which includes at least a latitude, longitude, and timestamp. Additional information may be associated with the probe data points, such as speed, heading, or other data. A trajectory includes a set of probe data points, where probe data points of a trajectory may include a trajectory identifier that associates the probe data points with one another. Mobility data captured in trajectories identifies the movement of a user over time. Anonymization of mobility data is frequently employed to improve privacy and reduce the likelihood of trajectories being associated with a particular person, device, or vehicle and to anonymize origins and destinations of trajectories.

While some destinations, such as origin, destination, work location, home location, and/or school/daycare locations, can be privacy-sensitive destinations, other destinations may not have the same privacy risks. For example, a destination that is a gas station may not be privacy-sensitive as it is unlikely to reveal any personal or private information associated with a person visiting the gas station. While embodiments described herein generally avoid revealing destinations in probe data provided to a location-based service provider, some embodiments can consider the privacy sensitivity of destinations in determining whether probe data associated with a given destination can be disclosed to a location-based service provider. As such, destinations of example embodiments may include a degree of sensitivity of a destination, and use the degree of sensitivity in determining whether to provide such a destination to a location-based service provider. A measure which may be considered in determining sensitivity can include, for example, a number of people (e.g. represented by apparatuses) visiting a location associated with a destination. If thousands of people visit a particular location daily, that location may not be deemed particularly privacy-sensitive, for example.

Trajectory data as described herein is defined as a set of data points, each data point including a location and a timestamp. The location may be in the form of latitude and longitude, and potentially altitude. Additional information may be associated with a data point, such as speed, heading, etc. If a trajectory identifier, device identifier, or session identifier is associated with each point, the trajectory data can be partitioned into a set of trajectories, each of which identifies the movement of a user over a period of time.

Location-based service providers may provide trajectory data to customers, such as municipalities interested in traffic optimization, data producers (e.g., drivers who share their trajectory data with the service provider), or the like. Any trajectory that reveals a user's behavioral patterns (e.g., going from A to B) can potentially reveal privacy-sensitive information and locations. Embodiments described herein mitigate this issue by recommending routes and/or parking locations that do not reveal a destination POI.

Trajectories for a vehicle and/or mobile device can facilitate the use of location-based services for a variety of functions. However, trajectories themselves may provide substantial information regarding an origin, destination, stay points, and path taken by a user associated with a vehicle or mobile device raising privacy concerns. Location-based services rely on accurate location information to provide the most accurate and relevant service. Location-based services are useful to a variety of consumers who may employ location-based services for a wide range of activities. Services such as the identification of traffic location and density, providing information regarding goods and services available in a specific location, and identifying a target group of consumers in a particular location or who travel along a particular path, are among many other location-based services.

Origins, destinations, and stay points of trajectories can be particularly privacy sensitive as they can reveal substantial levels of information associated with a person such as their home address, work address, doctor's office, etc. Thus, anonymization algorithms often redact a portion of a trajectory at a start of the trajectory and a portion of the trajectory at the end of the trajectory before providing the remaining portion of the trajectory for location-based services. The remaining portion of the trajectory may be anonymized using various techniques, such as splitting and gapping, to reduce the likelihood of associating the trajectory with a particular user.

An origin can be deciphered from trajectory data since it is where the trajectory necessarily begins. Thus, there are various ways to obfuscate the origin. However stay points and destinations are particularly more challenging to obfuscate or hide, especially when stay points and destinations are not known by the anonymization algorithm ahead of arrival. While embodiments described herein apply to destinations, destinations may be treated as stay points, where a stay point is defined as a location where a mobile device or vehicle dwells for at least a predetermined period of time, such as more than five minutes. Thus, stay points can be interpreted as destinations along a trajectory. Stay points or destination points where a user may dwell for a predetermined period of time can reveal privacy-sensitive information. These stay points or destinations can reveal shopping locations, medical care locations, places of work, home locations, etc. Such information may be regarded as private to an individual as they may not wish for this information to be made available to location-based service providers or to other entities, particularly when the user is unfamiliar with how such information may be used.

The anonymization of trajectory information is often performed by a routing server or map services provider and can be done during the travel along the trajectory or after the trajectory is complete. The entity performing the anonymization obtains raw data of the entire trajectory including origin and destination before implementing or while implementing the anonymization strategy. Thus, the raw information provided to the service provider is vulnerable to reidentification of origin, destination, path, and the source of the trajectory. Anonymization may obscure the origin and destination; however, a user cannot be certain that such anonymization was sufficiently thorough to mask the origin, destination, and stay points.

While many map service providers and routing services employ some form of anonymization, some service providers or apps may track the location of a user and not employ any form of anonymization. For such a scenario, there are no safeguards for the privacy of a user's trajectory.

While location-based services are desirable for both consumers and for service providers, consumers are often concerned with the amount of information shared about their routines and activities. Thus, while consumers and service providers want to engage with location-based services, consumers generally desire to maintain some degree of privacy. Embodiments described herein provide a method, apparatus, and computer program product for anonymizing destinations, and more particularly, to contextually recommend parking locations to improve the privacy of visited destination points-of-interest.

Embodiments of the present disclosure provide a system that enables users to benefit from increased privacy when visiting some specific point-of-interest categories (e.g., as stay points or destinations) by contextually recommending parking locations for visiting such points-of-interest. A routing engine can assess different privacy metrics for the origin/destination, route, and mode of transport and further on the time of day. If there is a reasonable possibility that the point-of-interest is confused with or linked to a sensitive point-of-interest, the parking location may be adjusted accordingly.

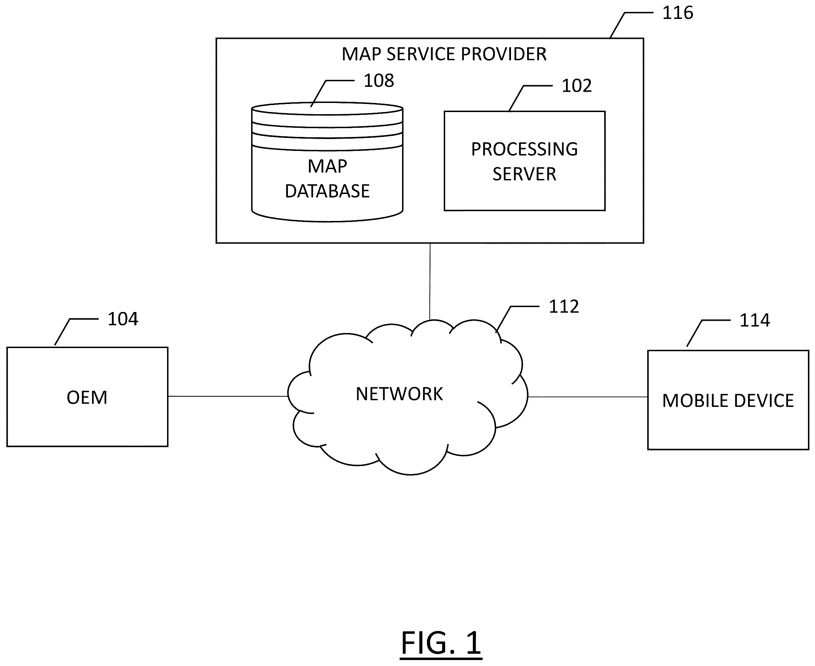

To provide an improved manner of recommending parking locations that can reduce a likelihood of an adversary identifying a sensitive point-of-interest as or proximate the destination, a system as illustrated in Figure 1 may be used. Figure 1 illustrates a communication diagram of an example embodiment of a system for implementing example embodiments described herein. The illustrated embodiment of Figure 1 includes a map service provider 116, a processing server 102 in data communication with an original equipment manufacturer (OEM) 104 and/or a geographic map database, e.g., map database 108 through a network 112, and one or more mobile devices 114. The OEM may be one form of a trajectory source from which a trajectory of a probe or mobile device is received. Optionally, the one or more mobile devices 114 may be a trajectory source for any service connected via network 112, whether that service is part of the map service provider 116, a third-party application (e.g., a mobile food ordering app, a family location-sharing app, etc.). The trajectory source may optionally include third party service providers or app developers, for example. The mobile device 114 may be associated, coupled, or otherwise integrated with a vehicle, such as in a vehicle's head unit, infotainment unit, or an advanced driver assistance system (ADAS), for example. Additional, different, or fewer components may be provided. For example, many mobile devices 114 may connect with the network 112. The map service provider 116 may include computer systems and network of a system operator. The processing server 102 may include the map database 108, such as a remote map server. The network may be wired, wireless, or any combination of wired and wireless communication networks, such as cellular, Wi-Fi, internet, local area networks, or the like.

The OEM 104 may include a server and a database configured to receive probe data from vehicles or devices corresponding to the OEM. For example, if the OEM is a brand of automobile, each of that manufacturer's automobiles (e.g., mobile device 114) may provide probe data to the OEM 104 for processing. That probe data may be encrypted with a proprietary encryption or encryption that is unique to the OEM. The OEM may be the manufacturer or service provider for a brand of vehicle or a device. For example, a mobile device carried by a user (e.g., driver or occupant) of a vehicle may be of a particular brand or service (e.g., mobile provider), where the OEM may correspond to the particular brand or service. The OEM may optionally include a service provider to which a subscriber subscribes, where the mobile device 114 may be such a subscriber. While depicted as an OEM 104 in Figure 1, other entities may function in the same manner described herein with respect to the OEM. For example, independent location-based service providers or other entities may participate and contribute in the same manner as described herein with respect to an OEM. As such, the OEM 104 illustrated in Figure 1 is not limited to original equipment manufacturers, but may be any entity participating as described herein with respect to the OEMs.

The OEM 104 may be configured to access the map database 108 via the processing server 102 through, for example, a mapping application, such that the user equipment may provide navigational assistance to a user among other services provided through access to the map service provider 116. According to some embodiments, the map service provider 116 may function as the OEM, such as when the map service provider is a service provider to OEMs to provide map services to vehicles from that OEM. In such an embodiment, the map service provider 116 may or may not be the recipient of vehicle probe data from the vehicles of that manufacturer. Similarly, the map service provider 116 may provide services to mobile devices, such as a map services provider that may be implemented on a mobile device, such as in a mapping application. According to such an embodiment, the map service provider 116 may function as the OEM as the map service provider receives the probe data from the mobile devices of users as they travel along a road network.

The map database 108 may include node data, road segment data or link data, point of interest (POI) data, or the like. The map database 108 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, cars, trucks, buses, motorcycles, and/or other entities. Optionally, the map database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, on-street parking, and other navigation related attributes, as well as POIs, such as fueling stations, hotels, restaurants, museums, stadiums, offices, auto repair shops, buildings, stores, parks, etc. Parking lots, parking areas, parking structures, and other parking facilities are considered in some circumstances to be POIs. However, for the purposes of the present application, such parking facilities will be referred to separately from non-parking POIs which may be privacy or non-privacy sensitive. The map database 108 can include data about the POIs and their respective locations in the POI records. The map database 108 may include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the map database 108 can include event data (e.g., traffic incidents, construction activities, scheduled events, unscheduled events, etc.) associated with the POI data records or other records of the map database 108.

The map database 108 may be maintained by a content provider e.g., a map service provider. By way of example, the map service provider can collect geographic data to generate and enhance the map database 108. There can be different ways used by the map service provider to collect data. These ways can include obtaining data from other sources, such as municipalities or respective geographic authorities. In addition, the map service provider can employ field personnel to travel by vehicle along roads throughout the geographic region to observe features and/or record information about them, for example. Also, remote sensing, such as aerial or satellite photography, can be used to generate map geometries directly or through machine learning as described herein.

The map database 108 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by mobile device 114, for example. The navigation-related functions can correspond to vehicle navigation, pedestrian navigation, or other types of navigation. While example embodiments described herein generally relate to vehicular travel, example embodiments may be implemented for bicycle travel along bike, watercraft travel along waterway navigational routes, pedestrian routes etc. The compilation to produce the end user databases can be performed by a party or entity separate from the map service provider. For example, a customer of the map service provider, such as a navigation device developer or other end user device developer, can perform compilation on a received map database in a delivery format to produce one or more compiled navigation databases.

As mentioned above, the server side map database 108 may be a master geographic database, but in alternate embodiments, a client side map database 108 may represent a compiled navigation database that may be used in or with end user devices (e.g., mobile device 114) to provide navigation and/or map-related functions. For example, the map database 108 may be used with the mobile device 114 to provide an end user with navigation features. In such a case, the map database 108 can be downloaded or stored on the end user device (mobile device 114) which can access the map database 108 through a wireless or wired connection, such as via a processing server 102 and/or the network 112, for example.

In one embodiment, the mobile device 114 can be an in-vehicle navigation system, such as an ADAS, a personal navigation device (PND), a portable navigation device, a cellular telephone, a smart phone, a personal digital assistant (PDA), a watch, a camera, a computer, and/or other device that can perform navigation-related functions, such as digital routing and map display. An end user can use the mobile device 114 for navigation and map functions such as guidance and map display, for example, and for determination of one or more personalized routes or route segments based on one or more calculated and recorded routes, according to some example embodiments.

An ADAS may be used to improve the comfort, efficiency, safety, and overall satisfaction of driving. Examples of such advanced driver assistance systems include semi-autonomous driver assistance features such as adaptive headlight aiming, adaptive cruise control, lane departure warning and control, curve warning, speed limit notification, hazard warning, predictive cruise control, adaptive shift control, among others. Other examples of an ADAS may include provisions for fully autonomous control of a vehicle to drive the vehicle along a road network without requiring input from a driver. Some of these advanced driver assistance systems use a variety of sensor mechanisms in the vehicle to determine the current state of the vehicle and the current state of the roadway ahead of the vehicle. These sensor mechanisms may include radar, infrared, ultrasonic, and vision-oriented sensors such as image sensors and light distancing and ranging (LiDAR) sensors.

Some advanced driver assistance systems may employ digital map data. Such systems may be referred to as map-enhanced ADAS. The digital map data can be used in advanced driver assistance systems to provide information about the road network, road geometry, road conditions, and other information associated with the road and environment around the vehicle. Unlike some sensors, the digital map data is not affected by the environmental conditions such as fog, rain, or snow. Additionally, the digital map data can provide useful information that cannot reliably be provided by sensors, such as curvature, grade, bank, speed limits that are not indicated by signage, lane restrictions, and so on. Further, digital map data can provide a predictive capability well beyond the driver's vision to determine the road ahead of the vehicle, around corners, over hills, or beyond obstructions. Accordingly, the digital map data can be a useful and sometimes necessary addition for some advanced driving assistance systems. In the example embodiment of a fully-autonomous vehicle, the ADAS uses the digital map data to determine a path along the road network to drive, such that accurate representations of the road are necessary, such as accurate representations of intersections and turn maneuvers there through.

The processing server 102 may receive probe data, directly or indirectly, from a mobile device 114, such as when the map service provider is functioning as the OEM 104. Optionally, the map service provider 116 may receive probe data indirectly from the mobile device 114, such as when the mobile device 114 provides probe data to the OEM 104, and the OEM provides certain elements of the probe data to the map service provider 116. The OEM 104 may anonymize the probe data or otherwise process the probe data to maintain privacy of a user of the mobile device 114 before providing the data to the map service provider 116. The mobile device 114 may include one or more detectors or sensors as a positioning system built or embedded into or within the interior of the mobile device 114. Alternatively, the mobile device 114 uses communications signals for position determination. The mobile device 114 may receive location data from a positioning system, such as a global navigation satellite system (GNSS ) like GPS, GLONASS, BeiDou or GALILEO, cellular tower location methods, access point communication fingerprinting, or the like. The server 102, either directly or indirectly, may receive sensor data configured to describe a position of a mobile device, or a controller of the mobile device 114 may receive the sensor data from the positioning system of the mobile device 114. The mobile device 114 may also include a system for tracking mobile device movement, such as rotation, velocity, or acceleration. Movement information may also be determined using the positioning system. The mobile device 114 may use the detectors and sensors to provide data indicating a location of a vehicle. This vehicle data, also referred to herein as "probe data", may be collected by any device capable of determining the necessary information, and providing the necessary information to a remote entity. The mobile device 114 is one example of a device that can function as a probe to collect probe data of a vehicle.

More specifically, probe data (e.g., collected by mobile device 114) may be representative of the location of a vehicle at a respective point in time and may be collected while a vehicle is traveling along a route. According to the example embodiment described below with the probe data being from motorized vehicles traveling along roadways, the probe data may include, without limitation, location data, (e.g. a latitudinal, longitudinal position, and/or height, GPS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like. The mobile device 114, may be any device capable of collecting the aforementioned probe data. Some examples of the mobile device 114 may include specialized vehicle mapping equipment, navigational systems, mobile devices, such as phones or personal data assistants, or the like.

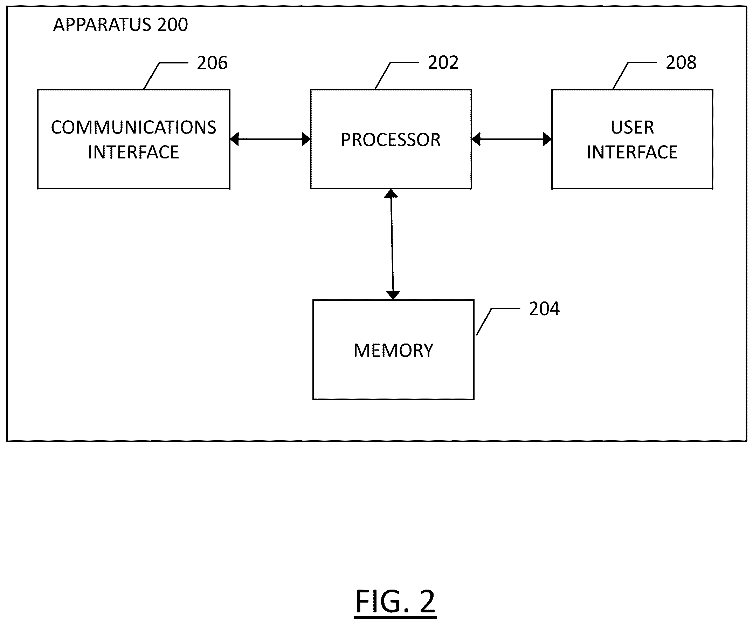

An example embodiment of a processing server 102 and/or an OEM 104 may be embodied in an apparatus as illustrated in Figure 2. The apparatus, such as that shown in Figure 2, may be specifically configured in accordance with an example embodiment of the present disclosure for anonymizing trajectories of mobile devices, and more particularly, obfuscate privacy-sensitive dwell points or destinations of calculated routes. The apparatus may include or otherwise be in communication with a processor 202, a memory device 204, a communication interface 206, and a user interface 208. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (for example, a computer readable storage medium) comprising gates configured to store data (for example, bits) that may be retrievable by a machine (for example, a computing device like the processor 202). The memory device may be configured to store information, data, content, applications, instructions, or the like, for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (for example, physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor specific device (for example, a mobile terminal or a fixed computing device) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

The apparatus 200 of an example embodiment may also include a communication interface 206 that may be any means such as a device or circuitry embodied in either hardware or a combination of hardware and software that is configured to receive and/or transmit data to/from a communications device in communication with the apparatus, such as to facilitate communications with one or more OEM 104 or the like. In this regard, the communication interface may include, for example, an antenna (or multiple antennae) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware and/or software for supporting communication via cable, digital subscriber line (DSL), universal serial bus (USB) or other mechanisms.

The apparatus 200 may also include a user interface 208 that may in turn be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, one or more microphones, a plurality of speakers, or other input/output mechanisms. In one embodiment, the processor may comprise user interface circuitry configured to control at least some functions of one or more user interface elements such as a display and, in some embodiments, a plurality of speakers, a ringer, one or more microphones and/or the like. The processor and/or user interface circuitry comprising the processor may be configured to control one or more functions of one or more user interface elements through computer program instructions (for example, software and/or firmware) stored on a memory accessible to the processor (for example, memory device 204, and/or the like).

The apparatus 200 of some embodiments may be integrated with or otherwise on-board the vehicle whereby the apparatus 200 may be equipped with or in communication with (e.g., via communications interface 206) one or more sensors, such as a Global Navigation Satellite System (GNSS) sensor (e.g., GPS, Galileo, GLONASS, BeiDou etc.), accelerometer, image sensor, inertial measurement unit (IMU), gyroscope, magnetic field sensor, etc. Any of the sensors may be used to sense information regarding the location, movement, positioning, or orientation of the apparatus for use in identifying a location of the apparatus 200. In some embodiments, the apparatus 200 ma derive information regarding location, movement, position, or orientation of the apparatus 200 based on communication signals perceived by the communications interface 206 such as through signal triangulation or signal fingerprinting, for example. In some embodiments, the apparatus may combine both sensor information and communication signals to drive a location of the apparatus 200.

Location-based services (LBS) such as real-time traffic information, fleet management, and navigation among others, are based on the analysis of mobility data that users of such services provide. Mobility data is associated with a privacy level and accuracy value. An accuracy value is based on the intrinsic utility of data toward the generation of location-based services. The privacy value reflects the sensitive information that mobility data reveals about a user's habits, behaviors, and personal information such as their home and/or work address.

Location-based service providers endeavor to collect as much location data as possible to maximize the accuracy of the location-based services, while attempting to minimize the associated risks for the privacy of the users particularly as it relates to the inadvertent disclosure or misuse of data. To reduce the privacy risk, location-based service providers may apply privacy-enhancing algorithms on data. Privacy-enhancing algorithms function by removing or altering features of the data that may remove privacy, and this operation typically renders the data less accurate and thus less valuable for the location-based service provider.

Some location-based services, such as traffic density or traffic speed information, require low data latency, such that anonymization of trajectory data must be performed in real-time or near real-time to be accurate at any given time. While historical data can provide some indication of anticipated traffic density and speed, real-time or near real-time data provides the most accurate traffic information. An example anonymization technique uses splitting and gapping of the trajectory, where the trajectory is only published to a location-based service provider after anonymization is applied. Anonymization in this manner splits input trajectory data into a number of sub-trajectories associated with different trajectory identifiers (IDs) and gaps are left between the sub-trajectories, such that it is not obvious for an adversary as to how to reconstruct a trajectory that has been split and gapped. The sizes of the sub-trajectories and gaps can be configured based on parameters of the anonymization algorithm and can be set or tuned according to the use case.

While splitting and gapping of trajectories is an effective method of anonymizing trajectories, in order to increase privacy, additional considerations may to be provided for stay points or destinations of a trajectory as they may reveal sensitive information (e.g., home, work addresses) or be used to link a dataset to an external source, such as a destination near a hospital linked to medical records. A standard technique to obfuscate origins and destinations can include cutting off the beginning and/or end of a trajectory. This technique works well for trajectory origins and for historical data where trajectory origins and destinations are known; however, this technique is less effective for real-time or near real-time anonymization of trajectories. While obfuscating an origin can be performed in real-time or near real-time, there exists no repeatable and reliable way to obfuscate a destination without prior knowledge of the destination location. In real-time and near real-time, trajectory data chunks are received periodically during the trajectory as the trajectory is traversed, and only when a mobile device or vehicle has stopped sending new positions/probe data points or when the device is stationary can a destination be identified. Embodiments described herein can help obfuscate the destination of a trajectory even in real time by helping to mask a destination associated with an end of the trajectory where a vehicle stops.

Embodiments described herein provide privacy to users of location-based services by adding uncertainty regarding a stay point or destination of a trajectory. An origin, destination, separately or as a pair, and even portions of a trajectory not including the origin or destination, can reveal sensitive locations regarding the user that generated the trajectory data, such as a home location and/or a work location, a path there between, route preferences, tendencies, or the like. Further, identification of an origin, a destination, or other stay points may render the identity of the individual user relatively easy to obtain.

Stay points and destinations often include points-of-interest where a user is planning to go for some purpose. Some points-of-interest (POIs) may be deemed sensitive points-of-interest, where a user deemed to have visited one of these sensitive POI may be concerned with privacy. Points-of-interest in a map database may be categorized (e.g., restaurant, retail store, doctor's office, place of worship, etc.) and some of these categories may be deemed sensitive. Such a sensitivity designation can be user defined where a user selects sensitive POI categories, crowd sourced where a category of POI frequently deemed sensitive is thereby categorized as sensitive, or otherwise prescribed (e.g., by governmental privacy rules, by region, etc.). Regardless of how a POI category is deemed sensitive, embodiments described herein provide a mechanism through which a user may be provided additional privacy when visiting a point-of-interest that is or is proximate to a sensitive POI.

Embodiments described herein provide a routing engine available to a routing application or map service provider, that can process routing requests such that a route's privacy sensitivity can be determined and alternate routes leading to greater privacy protection can be proposed. The proposed routing engine can provide alternative routes that include fastest, shortest, least expensive, and most private, for example. The proposed routing engine can optionally provide temporally-based routing, where a different departure time or arrival time proximate a sensitive POI may be offered as alternatives, such as an alternative arrival time when anonymity (e.g., k-anonymity) is likely to be higher due to a higher number of probe data sources present.

According to an example embodiment, the privacy-sensitive routing for a POI may be a selectable option for a user. A user may request a route via an application (e.g., an in-vehicle navigation system, a mobile device, etc.) to a POI. The POI may be deemed to be in a sensitive POI category, or as detailed below, proximate a POI that is in a sensitive POI category. The application may indicate to a user that the route may be to a location that is considered a destination of or near a sensitive POI category, at which point the user may be offered an option to conduct sensitive destination routing to enhance privacy, or to decline such sensitive destination routing and proceed with standard routing priorities (e.g., fastest, most efficient, etc.).

Embodiments described herein provide a routing system that can determine if a destination is a sensitive POI or sensitive destination, and a user may optionally specify if a destination is sensitive. The sensitivity may be rated on a scale, (e.g., on a scale of 1-10) to determine a degree of anonymization that may be appropriate. A user may indicate a privacy level or rating based on the type of POI that is going to be visited. Embodiments can employ privacy present ratings, such as a doctor's office may be a 5 out of 10 by default, with a value manually changeable by users during route selection. A florist could be a 1 out of 10, though the user could indicate that the POI to be visited is sensitive which would indicate that the user wishes to keep the chosen florist destination as private to reduce the likelihood of an adversary determining that the florist was visited.

Embodiments of the present disclosure aim to inform a user of privacy risks associated with visiting certain POIs, and to allow a user to determine how sensitive the destination is to them along with enabling a user to maximize their anonymity when visiting a sensitive POI through sensitive destination routing. The privacy risk can be measured based on a likelihood that the user can be reidentified from a trajectory, or that a destination can be identified from a trajectory associated with the user. This reassociation risk can be measured, for example using k-anonymity, where k-anonymity is considered a privacy measure.

The privacy risk can be measured based on a likelihood that the user can be reidentified from a trajectory, or that a destination can be identified from a trajectory associated with the user. The reassociation risk can be measured from properties of the trip and of the map, such as using k-anonymity. The value k may refer to the number of similar trajectories that may confuse the reidentification of a trajectory source from its trajectory. For example, *k* may reflect the number of people which have access to a private parking lot, or the number of vehicles that entered a public parking lot within a limited period of time. Alternatively, the value k may refer to the number of POIs that may confuse the identification of a destination. For example, k may reflect the number of POIs that are serviced by the same public parking lot, or the number of POIs in the same building which are open at the current time.

The sensitivity rating for a category of POI or individual POIs may be crowdsourced in some embodiments, where a system can learn the sensitivity of a POI. This may be useful, for example, when a category of a POI may not be sensitive, but a specific POI within that category may be located adjacent or proximate to a highly sensitive POI, such that even though the specific POI is not in a sensitive category, the likelihood of confusion with the highly sensitive POI may merit a higher degree of sensitivity afforded the specific POI.

According to an example embodiment, a user may select one destination/POI or a series of destinations/POIs as waypoints, and the user may select for each destination a degree of sensitivity or accept a predefined sensitivity rating for one or more of the destinations. User responses to a sensitivity rating for a destination are used to recommend a route.

As responses are collected, a crowdsourcing initiative to build a sensitivity rating of places can be performed to aggregate responses from users for a particular POI and POIs by category. These user-specified sensitivity ratings can be aggregated based on the POI, the POI category, the time of day, day of the week, etc. Based on the sensitivity rating of the POIs, the sensitivity level for particular POIs and categories of POIs can evolve over time. This sensitivity level or a POI or a category of POIs may influence a time at which a user wants to visit certain POIs. For example, for a specific POI, a shopping center that includes a doctor's office as the POI destination may be busy during particular times of day or days of the week, such that the sensitivity of the doctor's office during these times is low, as there are many other POIs within the shopping center that mask a true destination for a user arriving at the shopping center. However, during times when the shopping center is not busy or when many stores are closed, the available POIs at the shopping center are greatly reduced, rendering the doctor's office more discernable from a user arriving at the shopping center.

Embodiments described herein can be employed by scheduling software, where a user may schedule an appointment at a particular POI. A particular instance of a POI that is near sensitive POIs, or a sensitive POI itself may recommend to a user that wishes to schedule an appointment that anonymity is highest during certain times, and lowest at other times, which may influence a user's desired appointment time.

Information relating to a POI's sensitivity rating may be associated with the POI's location within a map database. For example, if a user selects a certain destination, whether that destination is a sensitive POI or sufficiently close to a sensitive POI that the destination may be ambiguous, the selected destination may display a metric concerning times/days when the anonymity of visiting is highest versus times/days when anonymity of visiting is lowest, and association of a user with a sensitive POI may be highest. A POI may indicate the times/days to visit to maximize privacy (e.g., when traffic is highest proximate the POI) or when there is a relatively higher risk to privacy (e.g., when traffic is lowest proximate the POI).

For a certain destination in a generalized case, there may be an overall (e.g., not time/day dependent) sensitivity level for the destination. For a specific time slot being considered for a POI, such as an appointment, embodiments can indicate time-specific sensitivity levels for the destination. According to some embodiments, the method described herein may provide a suggestion for a time slot for a booking/appointment/arrival time based on time-specific sensitivity level of the destination. For example, if a medical office in a shopping center is the only business open before 10am, a suggestion may be made to schedule an appointment at the medical office after 10am when there are additional POIs open within the same shopping center, thereby obfuscating the medical office destination which may be a privacy sensitive POI.

The time spent at a sensitive POI can also contribute to the privacy level. According to an example embodiment, a visit time to a specific POI may be known based on estimated queuing times. The specific amount of time visiting a sensitive POI, even if the sensitive POI is proximate non-sensitive POIs, may risk privacy of visiting the sensitive POI. For example, if visits to a particular shopping center generally take 30 minutes, but to a doctor's office within the shopping center generally takes an hour, and to a hair dresser in the shopping center a visit usually takes two hours. Spending an hour at the shopping center may indicate to an adversary that the purpose of the visit to the shopping center was to visit the sensitive POI of the doctor's office. Embodiments described herein can identify such scenarios and recommend to a user to visit another POI within the shopping center to alter the actual visit time to the shopping center, thereby reducing the likelihood that an adversary could determine that the sensitive POI was visited. Embodiments provided herein can recommend privacy-enhancing behaviors to a user such as arriving early, leaving later, or otherwise adding noise to a trajectory that can reduce the likelihood of the trajectory providing an indication that a sensitive POI was visited.

The present disclosure can enhance POI information using sensitivity information pertaining to a POI. With information associated with numerous POIs within a geographic area, embodiments can alter a sensitivity rating of a first POI in response to a nearby second POI closing (e.g., increasing the likelihood that a visit is to the first POI) or if parking availability changes (e.g., certain parking areas may be for only a specific POI while that POI is open for business). The system of example embodiments can monitor over time how changes to a geographical area change and notify a user if there is an increased privacy risk associated with a sensitive POI.

Examples of changes within a geographical area that can result in a change to the privacy risk of a sensitive POI can include changes such as map changes, where POIs may open or close, roads may increase or decrease traffic level, and parking availability may change. Each of these changes can alter the sensitivity level of a POI. For example, if a parking area is shared between a restaurant and a medical building, and the restaurant is only open for breakfast and lunch, a late afternoon visit to the parking area may indicate that the user is visiting the medical building. Roads may change due to construction proximate a POI, such that a specific road may have previously been used to access multiple POIs, but now accesses only a single POI. A trajectory taking that road may readily associate that trajectory with the single POI as a destination. A shopping center may have various stores that open after 10am, but a doctor's office is open at 8am, such that trajectories that have a destination of the shopping center before 10am may be readily associated with the doctor's office.

Embodiments described herein are thus able to recommend times, dates, routes, and destinations that can improve a user's privacy by reducing the likelihood of a destination POI being discernable from the trajectory alone. Further, embodiments can provide recommendations regarding parking locations proximate POIs and/or other transportation modes to better obfuscate an actual destination POI of the user.

Depending upon the sensitivity rating of a POI (as either dictated by a user or determined by the system), the routing to that POI as a destination can adapt to provide more options for reaching the POI and for parking proximate the POI. The system of example embodiments can provide a navigation algorithm that will initially attempt to compute one or more routes to the destination with privacy trade-offs.

Parking locations in many cases have a prominent effect on privacy risk. The correlation between a busy parking lot and privacy risk can be understood through several key points. Crowded areas such as crowded parking lots provide anonymity within the crowd. There is reduced identifiability as in a busy parking lot it is more challenging to identify individual vehicles and trajectories, thus providing a layer of anonymity. The larger number of cars or mobile devices, the more difficult it becomes to pinpoint a specific individual's visit. Crowded areas also mean more vehicle and more data noise, which can obscure specific patterns and make it more difficult for someone to track or infer individual behaviors.

Data aggregation also provides improvements in privacy. When data on parking availability is aggregated, individual movements are masked. High parking occupancy rates make it harder to single out any one person's activities based on parking data alone. Busy parking lots tend to generate generalized data patterns rather than specific vehicle tracking, thereby reducing privacy risks associated with precise location tracking.

Behavior interferences also influence privacy. A crowded parking lot indicates that many people are present for various reasons, making it difficult to infer specific activities or destinations. This diffuses the potential for making accurate tracking assumptions about why someone is in a specific area. For example, performing a short activity like grocery shopping might take longer because of crowds and become more difficult to infer. When sensitive places like a hospital have a busy parking area, the inference that a specific individual is visiting for sensitive reasons is diluted, thereby improving the person's privacy.

While crowded areas provide some degree of anonymity, intelligent sensitive destination routing with an understanding of sensitive POIs can provide improved anonymity with a lower likelihood of reidentification of the POIs visited by a user. For example, a number of possible parking places can be identified for a destination, such as if the parking can be within a five minute walk of the destination based on isolines or known pathways. Isoline-based catchment areas for parking associated with sensitive POIs may be generated, which would use isolines to identify how far a person can go in a given time. However, in certain areas such as those that are geographically constricted, isolines may not function as well as geographic impediments such as rivers, cliffs, non-public spaces, or the like could render as few as one isoline viable from the parking area to the destination thereby revealing the destination. Isoline sizing may be made such that at least *n* POIs can be reached within the isoline distance limit (e.g. 5 minute walk).

Embodiments can provide intermodal exchange recommendations to further improve ambiguity. For example, if a user taking a car to a given POI would reveal too much information, the system of example embodiments could consider suggesting a different transport mode to reach the POI, possibly combining transport modes such as Park & Ride, public transit, parking nearby but using shared mobility (e.g., bikes, scooters, etc.) to reach the POI, rideshare app, or parking a distance away and walking to reach the POI. Various routing recommendations can be made, with each route indicating a degree of privacy afforded by using that particular route/destination.

The routing system providing recommendations for routes to a sensitive POI can use various factors to determine the fastest route to a destination, but also provide various other options with privacy trade-offs and a degree of privacy afforded by each route. The factors influencing such routing can include: ETA (Estimated time of Arrival), additional privacy introduced by multiple transport modes, time trade-off versus fastest route, weather and mode of transport, convenience, price, availability of shared mobility, predicted events and/or traffic, etc. Embodiments may optionally consider a return trip, particularly when public transit is involved or walking though an area deemed unsafe after a certain time of day. If a route to a destination includes a return trip that is not possible (e.g., after a bus stops running) or less safe (e.g., walking a return route after dark), the route may be discarded from consideration.

For a waypoint POI or destination POI, a sensitivity of the POI can be determined by one or more methods. The sensitivity can be based on a crowdsourced sensitivity value, a user-assigned value, a map service provider sensitivity rating, or any combination thereof. The user-assigned value may be a significant contributor if not a primary contributor since the user may best understand the actual sensitivity of a POI. For example, a doctor who works at a hospital or medical office may not view the hospital or medical office as a sensitive location as a patient may. The map service provider may rate the sensitivity based on how easy it is to connect a trajectory destination to a specific POI.

A measure of the difficulty in connecting a trajectory destination to a specific POI can factor in a variety of relevant issues. For example, identifying the road network associated to POIs and parking spaces. The parking spaces may be shared between POIs. The measure may determine for a given parking spot, how many POIs are linked to that parking spot - and depending on time of day or day of the week, are those POIs available to visit. If there is a private parking location or spaces for a medical office, the measure may consider other parking spaces, such as public parking which may be as close or closer to the medical office. The private and public parking may both have a close relationship with the POI, whereas the private parking may have a 1-to-1 relationship to the medical office POI, or 1-to-N with multiple parking locations for the medical office POI, whereas public parking has a N-to-1 relationship with N being all proximate POIs.

The difficulty in connecting a trajectory destination to a specific POI may also consider localization technique and accuracy/noise. For example, GPS positioning is most accurate when there is line-of-sight to the GPS satellites. However, in cities or urban canyons, the GPS positioning may be less accurate, where this inaccuracy can be exploited by a routing system to improve a measure of privacy through a noisy location signal. Parking may be recommended in a location where the localization is less accurate to obfuscate the destination POI. In an urban area with many POIs such as in high rise buildings, it can be difficult to pinpoint a POI visited by a user based on their parking location.

Embodiments described herein may recommend POIs in areas such as urban locations where there is significant difficulty in associating a parking destination with a specific POI. If a user is looking for a category of POI (e.g., a pharmacy), the location recommended may include a privacy measure to allow the user to select from several POIs based on how likely it is that the parking destination can be associated with that specific POI.

A user may be presented with multiple POIs to select from or multiple routes to a specific POI to maximize privacy and reduce the likelihood that their trajectory destination can be associated with a specific POI. The user may be presented with trade-offs or options that involve trade-offs to maximize privacy. These trade-offs can include things such as requiring a user to pay a parking fee or a public transit fee, a longer time to the POI in exchange for greater privacy, weather (e.g., parking further away during inclement weather), distance between parking and the actual POI, effort (e.g., does the parking location require additional steps to reach the POI). Based on a combination of these metrics, pareto-optimal options can be presented to the user. A user may manually set which trade-offs are more desirable versus which trade-offs are less desirable - such as a user that may wish to avoid public transit. The trade-offs can be used to rank the different POIs or different routes/parking locations for a specific POI.

While the provision of different POIs or different routes to a POI can be presented with a ranking and/or measure of privacy associated with the route and parking destination, users may wish to visit multiple POIs during a trip. A user may enter a number of POIs and a map service provider can establish one or more routes to reach each of the POIs along a trip. The routes can include options as with a single POI; however, the route options can include an order of POIs to be visited and trade-offs associated with the different routes. One order of POIs may be fastest, while second order of POIs may be more private. The routes can optionally provide sequences of POI visits and associated transport modes that could increase the privacy and reduce the likelihood that an adversary can identify one or more of the POIs visited.

Certain modes of transportation are more likely to reveal a visited POI. For example, a car drop-off proximate a destination may be revealing of the visited POI, while a bus drop-off may be less revealing as the bus has predefined stops that may or may not be close to a visited POI. A sequence of POIs to be visited can include a recommended route including recommended transportation modes and an order of POIs.

Routing for autonomous vehicles and/or electric vehicles can include additional considerations. For example, for an electric vehicle routing may consider a state of charge of the vehicle and available charging stations. The use of a charging station may or may not be revealing of a POI, and charging stations can help increase privacy if a vehicle is charged at the charging station. In a scenario in which an autonomous EV user is relatively far from home (e.g., 30 minutes or more), the autonomous EV may transport the user to a POI and drop off the user while the autonomous EV continues on to find parking. The autonomous EV might circle an area looking for parking or find a charging location while the user is busy. When the user has completed their visit to one or more POIs, the user may summon the autonomous EV for pick-up or otherwise travel (e.g., via shared mobility or walking) to where the autonomous EV is parked. This process may be influenced by parking conditions, vehicle charge level, parking cost, etc.

An autonomous vehicle can drop off a user near a POI and continue driving to parking that is selected based on cost, availability, and whether charging is needed. The ability to drop-off and pick-up in an autonomous vehicle can dramatically improve privacy, particularly if the autonomous vehicle performs the drop-off or pick-up in the flow of normal traffic (e.g., while stopped at a traffic light). An autonomous vehicle can park away from a POI thereby minimizing association of the trajectory with a particular POI.

Routing for autonomous vehicles can improve privacy by avoiding areas that may otherwise be destination-revealing. For example, a hospital may have a large parking lot and a driveway to a front entrance. Entering the parking lot or the driveway may indicate that the destination is the hospital, even if the autonomous vehicle doesn't stay or park in the parking lot. Rather, the autonomous vehicle may provide a drop-off at a location proximate the hospital entrance that is not uniquely associated with the hospital. Large complexes may have shuttles to distal private parking areas (e.g., airports, hospitals, etc.) that are serviced by shuttles. An autonomous vehicle may drop off a user proximate a shuttle stop which then introduces a change in transport mode that can improve privacy.

According to some embodiments, a map service provider may provide a map or routing interface for a user within a vehicle or on a device. Such a routing interface can be used in an offline mode whereby location information is not provided to a service provider. Embodiments may request routing to an online service from a destination to a waypoint (e.g. to a parking location for which a privacy metric has been calculated) for a first leg of the journey, and locally compute an offline route between the waypoint and the privacy sensitive destination. If routing to a particular destination recommends a 'hands-off' mode of transport (e.g., public transit, taxi, etc.) the algorithm can cache the required data in advance and enter offline mode (e.g. compute the route locally on-device and present it via a user interface of the device) until this leg of the journey is complete. When the user device (e.g., vehicle or mobile device) determines that the vehicle is stopped near a traffic light, a new routing request may be transmitted with a different identifier. During an intermodal exchange (e.g., waiting for a taxi or rideshare pickup), the user device may send a routing request with a different identifier. If a destination is less busy than usual (e.g. during a holiday), the user device may switch to offline mode for once the user is within several hundred meters of the destination.

In addition to identifying privacy-enhancing parking and transit proximate a destination POI, routing services as described herein can provide routes that improve privacy even a distance away from the POI. For example, roads with tolls and/or license plate readers may be deemed to adversely impact privacy, particularly when such roads do not lead to a plethora of POIs. License plate readers that may be present at the entrance of certain parking areas or shopping centers may also reduce a degree of anonymity. Embodiments provided herein can include routes to a destination that prioritize avoiding cameras, toll areas, or known license plate readers to improve the privacy of a particular route.

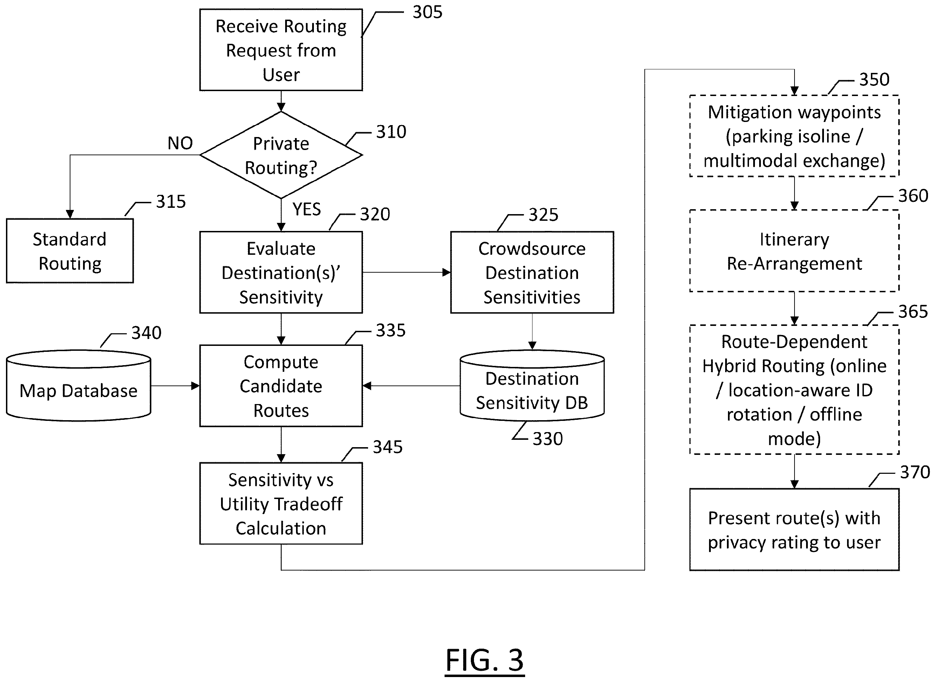

Figure 3 illustrates an example embodiment of the present disclosure for providing opportunities for improved privacy in reaching a destination POI. As shown, a routing request is received at 305. This routing request may be an address, a POI, a more general destination area (e.g., a parking lot or shopping district), etc. An option can be provide to a user at 310 as to whether they want to consider private routing to the destination. This option may be provided at each routing request or may be provided in response to an estimation that a destination may be privacy sensitive. If private routing is declined, standard routing will occur at 315. If private routing is desired, a evaluation of the intended destination POI sensitivity may be performed at 320.

A user may provide a sensitivity rating to the system which can be used in crowdsourcing destination sensitivities at 325. The crowdsourced destination sensitivities can be incorporated into the destination sensitivity database at 330 and provided for computation of candidate routes at 335. The computation of candidate routes at 335 employs the map database 340 to understand the geography of the map including a road network to reach the destination POI, but also to evaluate the parking opportunities proximate the destination POI including POI-specific parking, public/shared parking, street parking, garages, etc.

The computation of candidate routes at 335 can provide a plurality of routes and options for parking proximate the destination POI and/or parking proximate a transportation mode change (e.g., from car to public transit or shared mobility). The different routes and parking options can be evaluated at 345 to understand the trade-offs between convenience, speed, and privacy. Optionally, mitigation waypoints may be determined at 350, whereby a user can transition from driving to walking or a different form of transportation. The mitigation waypoints function to introduce a degree of doubt into the ultimate destination POI of the user. Optionally, itinerary rearrangement may be performed at 360 to identify how to reach multiple POIs during a trip in the most efficient manner while also considering how the order of POIs visited may impact the privacy of the user. Route-dependent hybrid routing may be performed at 365, where at least a portion of the routing is done offline or using different routing identifiers, for example.

At 370, the one or more routes are presented to a user such that the user can determine which route is most appropriate for them in balancing both efficiency and privacy. The user may be provided with a user input element, such as a virtual button, an interactive list, or the routes themselves overlaid on a map for example. There are trade-offs for improving privacy in many cases, and a user may decide if the improvement to privacy merits a somewhat less efficient route. The degree of privacy offered by a route may also be provided, such that if there is a significant time-of-arrival difference between two potential routes to a destination POI, but the degree of privacy between the routes is relatively small, then a user may elect to take the route that arrives soonest.

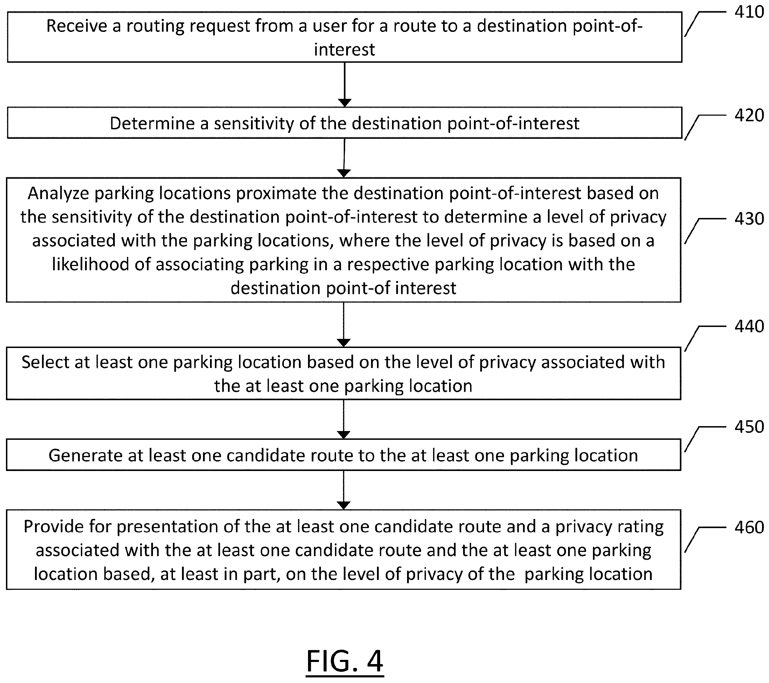

Figure 4 illustrates a flowchart depicting methods according to an example embodiments of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 204 of an apparatus employing an embodiment of the present invention and executed by a processor 202 of the apparatus. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Figure 4 illustrates a method of anonymizing trajectories of mobile devices, and more particularly, to contextually recommend parking locations to improve the privacy of visited points-of-interest. In the illustrated embodiment, a routing request is received from a user for a route to a destination point-of-interest. The routing request may be received from, for example, by an OEM 104 from a vehicle or mobile device 114. A sensitivity of the destination point-of-interest is determined at 420. This sensitivity may be determined, for example, by the map service provider 116; however, in some circumstances the sensitivity may be selected by a user or determined based on crowdsourcing information. Parking locations proximate the destination point-of-interest can be analyzed at 430 based on the sensitivity of the destination point-of-interest to determine a level of privacy associated with the parking locations, where the level of privacy is based on a likelihood of associating parking in a respective parking location with the destination point-of interest. At least one parking location is then selected at 440, such as by the map service provider 116 based on the level of privacy associated with the at least one parking location. At least one candidate route to the at least one parking location is generated at 450, such as by a routing engine of map service provider 116. At least one candidate route and a privacy rating associated with the at least one candidate route and the at least one parking location is provided for presentation at 460 based at least in part on the level of privacy of the parking location. The at least one candidate route and privacy rating may be presented, for example, on a display of an infotainment device of a vehicle, a mobile device, or the like.

In an example embodiment, an apparatus for performing the method of Figure 4 above may comprise a processor (e.g., the processor 202) configured to perform some or each of the operations (410-460) described above. The processor may, for example, be configured to perform the operations (410-460) by performing hardware implemented logical functions, executing stored instructions, or executing algorithms for performing each of the operations. Alternatively, the apparatus may comprise means for performing each of the operations described above. In this regard, according to an example embodiment, examples of means for performing operations 410-460 may comprise, for example, the processor 202 and/or a device or circuit for executing instructions or executing an algorithm for processing information as described above.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following numbered paragraphs are also disclosed:
1. An apparatus comprising at least one processor and at least one memory including computer program code, the at least one memory and computer program code configured to, with the processor, cause the apparatus to at least:
   receive a routing request from a user for a route to a destination POI (point-of-interest);
   determine a sensitivity of the destination POI;
   analyze parking locations proximate the destination POI based on the sensitivity of the destination POI to determine a level of privacy associated with the parking locations, wherein the level of privacy is based on a likelihood of associating parking in a respective parking location with the destination POI;
   select at least one parking location based on the level of privacy associated with the at least one parking location;
   generate at least one candidate route to the at least one parking location; and
   provide for presentation of the at least one candidate route and a privacy rating associated with the at least one candidate route and the at least one parking location based at least in part on the level of privacy of the at least one parking location.
2. The apparatus of numbered paragraph 1, wherein causing the apparatus to analyze the parking locations proximate the destination POI based on the sensitivity of the destination POI further comprises causing the apparatus to:
   analyze the parking locations and POIs (points-of-interest) proximate the destination POI to determine the level of privacy associated with the parking locations.
3. The apparatus of numbered paragraph 2, wherein a number of POIs proximate the parking locations is proportional to the level of privacy associated with the parking locations.
4. The apparatus of numbered paragraph 2, wherein causing the apparatus to analyze the parking locations and the POIs proximate the destination POI to determine the level of privacy associated with the parking locations comprises causing the apparatus to:
   analyze the parking locations and the POIs proximate the destination POI;
   determine the POIs proximate the destination POI that are available at a time the at least one candidate route is estimated to arrive at the parking locations; and
   determine the level of privacy associated with the parking locations based at least in part on availability of the POIs proximate the destination POI.
5. The apparatus of numbered paragraph 4, wherein the availability of the POIs proximate the destination POI corresponds to whether the POIs proximate the destination POI are open for business or closed.
6. The apparatus of numbered paragraph 1, wherein causing the apparatus to receive the routing request from the user for a route to the destination POI further comprises causing the apparatus to receive an indication that the routing request requires privacy.
7. The apparatus of numbered paragraph 1, wherein causing the apparatus to provide for presentation of the at least one candidate route and the privacy rating associated with the at least one candidate route and the at least one parking location based at least in part on the at least one parking location comprises causing the apparatus to:
   provide for presentation of at least two candidate routes, at least two parking locations, and privacy ratings associated with the at least two candidate routes and the at least two parking locations; and
   provide for a user input element to select a preferred one of the at least two candidate routes and the at least two parking locations.
8. The apparatus of numbered paragraph 1, wherein the sensitivity of the destination POI is determined by at least one of a user-entered sensitivity rating, a crowdsourced sensitivity rating, or a database of point-of-interest category sensitivity ratings.
9. The apparatus of numbered paragraph 1, wherein causing the apparatus to receive the routing request from the user for the route to the destination POI comprises causing the apparatus to:
   receive the routing request from the user for the route to the destination POI and at least one other waypoint POI.
10. The apparatus of numbered paragraph 9, wherein causing the apparatus to provide for presentation of the at least one candidate route and the privacy rating associated with the at least one candidate route at the at least one parking location comprises causing the apparatus to:
   provide for presentation of a first candidate route with a first order of the at least one other waypoint POI and the destination POI and a first privacy rating associated with the first candidate route; and
   provide for presentation of a second candidate route with a second order of the at least one other waypoint POI and the destination POI and a second privacy rating associated with the second candidate route, wherein the first order is different from the second order, and the first privacy rating is different from the second privacy rating.
11. The apparatus of numbered paragraph 1, wherein the at least one parking location is greater than a predefined distance from the destination POI, and wherein the at least one candidate route comprises an indication for the user to take at least one of public transit or shared mobility from the at least one parking location to the destination POI.
12. A computer program product comprising at least one non-transitory computer-readable storage medium having computer-executable program code portions stored therein, the computer-executable program code portions comprising program code instructions configured to:
   receive a routing request from a user for a route to a destination POI (point-of-interest);
   determine a sensitivity of the destination POI;
   analyze parking locations proximate the destination POI based on the sensitivity of the destination POI to determine a level of privacy associated with the parking locations, wherein the level of privacy is based on a likelihood of associating parking in a respective parking location with the destination POI;
   select at least one parking location based on the level of privacy associated with the at least one parking location;
   generate at least one candidate route to the at least one parking location; and
   provide for presentation of the at least one candidate route and a privacy rating associated with the at least one candidate route and the at least one parking location based at least in part on the level of privacy of the at least one parking location.
13. The computer program product of numbered paragraph 12, wherein the program code instructions to analyze the parking locations proximate the destination POI based on the sensitivity of the destination POI further comprise program code instructions to:
   analyze the parking locations and POIs (points-of-interest) proximate the destination POI to determine the level of privacy associated with the parking locations.
14. The computer program product of numbered paragraph 13, wherein a number of POIs proximate the parking locations is proportional to the level of privacy associated with the parking locations.
15. The computer program product of numbered paragraph 13, wherein the program code instructions to analyze the parking locations and the POIs proximate the destination POI to determine the level of privacy associated with the parking locations comprise program code instructions to:
   analyze the parking locations and the POIs proximate the destination POI;
   determine the POIs proximate the destination POI that are available at a time the at least one candidate route is estimated to arrive at the parking locations; and
   determine the level of privacy associated with the parking locations based at least in part on availability of the POIs proximate the destination POI.
16. The computer program product of numbered paragraph 15, wherein the availability of the POIs proximate the destination POI corresponds to whether the POIs proximate the destination POI are open for business or closed.
17. The computer program product of numbered paragraph 12, wherein the program code instructions to provide for presentation of the at least one candidate route and the privacy rating associated with the at least one candidate route and the at least one parking location comprise program code instructions to:
   provide for presentation of at least two candidate routes, at least two parking locations and privacy ratings associated with the at least two candidate routes, and the at least two parking locations; and
   provide for a user input element to select a preferred one of the at least two candidate routes and the at least two parking locations.
18. The computer program product of numbered paragraph 12, wherein the at least one parking location is greater than a predefined distance from the destination POI, and wherein the at least one candidate route comprises an indication for the user to take at least one of public transit or shared mobility from the at least one parking location to the destination POI.
19. A method comprising:
   receiving a routing request from a user for a route to a destination POI (point-of-interest);
   determining a sensitivity of the destination POI;
   analyzing parking locations proximate the destination POI based on the sensitivity of the destination POI to determine a level of privacy associated with the parking locations, wherein the level of privacy is based on a likelihood of associating parking in a respective parking location with the destination POI;
   selecting at least one parking location based on the level of privacy associated with the at least one parking location;
   generating at least one candidate route to the at least one parking location;
   calculating a privacy rating associated with the at least one candidate route and the at least one parking location based on a likelihood of associating the at least one candidate route and the at least one parking location with the destination POI; and
   providing for presentation of the at least one candidate route and the privacy rating associated with the at least one candidate route and the level of privacy of the at least one parking location.
20. The method of numbered paragraph 19, wherein analyzing the parking locations proximate the destination POI based on the sensitivity of the destination POI further comprises:
   analyzing the parking locations and POIs (points-of-interest) proximate the destination POI to determine the level of privacy associated with the parking locations.

## Claims

1. A computer-implemented method, the method comprising:
receiving a routing request from a user for a route to a destination Point-of-Interest, POI;
determining a sensitivity of the destination POI;
analyzing parking locations proximate the destination POI based on the sensitivity of the destination POI to determine a level of privacy associated with the parking locations, wherein the level of privacy is based on a likelihood of associating parking in a respective parking location with the destination POI;
selecting at least one parking location based on the level of privacy associated with the at least one parking location;
generating at least one candidate route to the at least one parking location; and
providing for presentation of the at least one candidate route and a privacy rating associated with the at least one candidate route and the at least one parking location based at least in part on the level of privacy of the at least one parking location.

2. The method of claim 1, wherein analyzing the parking locations proximate the destination POI based on the sensitivity of the destination POI further comprises:
analyzing the parking locations and Points-of-Interest, POIs, proximate the destination POI to determine the level of privacy associated with the parking locations.

3. The method of claim 2, wherein a number of POIs proximate the parking locations is proportional to the level of privacy associated with the parking locations.

4. The method of claim 2, wherein analyzing the parking locations and the POIs proximate the destination POI to determine the level of privacy associated with the parking locations further comprises:
analyzing the parking locations and the POIs proximate the destination POI;
determining the POIs proximate the destination POI that are available at a time the at least one candidate route is estimated to arrive at the parking locations; and
determining the level of privacy associated with the parking locations based at least in part on availability of the POIs proximate the destination POI.

5. The method of claim 4, wherein the availability of the POIs proximate the destination POI corresponds to whether the POIs proximate the destination POI are open for business or closed.

6. The method of any preceding claim, wherein receiving the routing request from the user for a route to the destination POI further comprises receiving an indication that the routing request requires privacy.

7. The method of any preceding claim, wherein providing for presentation of the at least one candidate route and the privacy rating associated with the at least one candidate route and the at least one parking location based at least in part on the at least one parking location further comprises:
providing for presentation of at least two candidate routes, at least two parking locations, and privacy ratings associated with the at least two candidate routes and the at least two parking locations; and
providing for a user input element to select a preferred one of the at least two candidate routes and the at least two parking locations.

8. The method of claim 7, further comprising providing for presentation of at least one trade-off for each of the at least two candidate routes and the at least two parking locations, wherein the at least one trade-off comprises one or more of added time relative to a candidate route having a lower privacy rating or a parking recommendation a greater distance away relative to a candidate route having a lower privacy rating.

9. The method of any preceding claim, wherein the sensitivity of the destination POI is determined by at least one of a user-entered sensitivity rating, a crowdsourced sensitivity rating, or a database of point-of-interest category sensitivity ratings.

10. The method of any preceding claim, wherein receiving the routing request from the user for the route to the destination POI further comprises receiving the routing request from the user for the route to the destination POI and at least one other waypoint POI.

11. The method of claim 10, wherein providing for presentation of the at least one candidate route and the privacy rating associated with the at least one candidate route at the at least one parking location comprises:
providing for presentation of a first candidate route with a first order of the at least one other waypoint POI and the destination POI and a first privacy rating associated with the first candidate route; and
providing for presentation of a second candidate route with a second order of the at least one other waypoint POI and the destination POI and a second privacy rating associated with the second candidate route, wherein the first order is different from the second order, and the first privacy rating is different from the second privacy rating.

12. The method of claim 11, wherein the candidate route further comprises a mitigation waypoint, the mitigation waypoint indicating a transition from driving to a different mode of transportation.

13. The method of any preceding claim, wherein the at least one parking location is greater than a predefined distance from the destination POI, and wherein the at least one candidate route comprises an indication for the user to take at least one of public transit or shared mobility from the at least one parking location to the destination POI.

14. A computer program product comprising computer-executable program code portions stored therein, the computer executable program code portions including program code instructions configured to perform a method according to any of claims 1-13.

15. An apparatus comprising means for performing a method according to any of claims 1-13.
